# EUROPÄISCHE PATENTSCHRIFT

(11) **EP 3 749 493 B1**
(45) Veröffentlichungstag und Bekanntmachung des Hinweises auf die Patenterteilung: **06.11.2024**
(21) Anmeldenummer: 19730309.2
(22) Anmeldetag: 10.06.2019
(51) Int. Cl.: B26D 5/08, B26D 3/16, B26D 1/60, B29C 48/00

(54) **VORRICHTUNG UND VERFAHREN ZUM ABLÄNGEN EINES EXTRUDIERTEN ROHRES**
DEVICE FOR CUTTING EXTRUDED PLASTIC PROFILES TO LENGTH
DISPOSITIF DE COUPE À LONGUEUR DE PROFILÉS EN MATIÈRE PLASTIQUE EXTRUDÉS

(30) Priorität: 15.06.2018 DE 102018114472; 15.06.2018 DE 102018114473; 15.06.2018 DE 102018114474
(43) Veröffentlichungstag der Anmeldung: 16.12.2020
(73) Patentinhaber: battenfeld-cincinnati Germany GmbH, 32547 Bad Oeynhausen (DE)
(72) Erfinder: DOHMANN, Herr Heinrich, 37671 Höxter (DE); DRÖGE, Herr Jörg, 47647 Kerken (DE); HUS, Tobias, 32312 Lübbecke Deutschland (DE)
(86) Internationale Anmeldenummer: PCT/EP2019/065078
(87) Internationale Veröffentlichungsnummer: WO 2019/238609

(56) Entgegenhaltungen:
- WO-A1-2014/153925
- CN-A- 102 407 378
- DE-A1- 102013 220 620

## Beschreibung

Die Erfindung betrifft eine Vorrichtung zum Ablängen eines extrudierten Kunststoffrohres mittels einer Trennvorrichtung und um die Extrusionsachse des extrudierten Rohres rotierbaren Trenneinheit, wobei die Trenneinheit drehbar gelagert ist und das Trennen mit an der Trenneinheit angeordneten Schneidwerkzeugen erfolgt, wobei zum Bewegen der Schneidwerkzeuge Energie übertragbar ist, wofür Elemente zur Energieübertragung an bewegte Teile angeordnet sind die mit auf eine in der Trenneinheit angeordneten rotierenden Aufnahmeeinheit in Wirkverbindung stehen. Sowie ein diesbezügliches Verfahren.

Verfahren und Vorrichtungen zum Ablängen von extrudierten Kunststoffrohren sind aus dem Stand der Technik bekannt. So beschreibt zum Beispiel die DE 102013220620 A1 eine Vorrichtung zum Ablängen eines vorzugsweise dickwandigen extrudierten Rohres, mit mindestens einem Trennwerkzeug und einer Aufnahmeeinheit für das Trennwerkzeug, wobei das Trennwerkzeug radial zur Extrusionsachse verfahrbar ist und über weitere Mittel um das abzulängende Rohr herum rotierbar ist, um das Rohr abzulängen. Dabei ist vorgesehen, dass das Trennwerkzeug mit einem Ringelement in Wirkverbindung steht und das Ringelement über einen Axialantrieb bewegbar ist und mittels einer Verstelleinheit die Eindringtiefe des Trennwerkzeuges und der Verfahrweg bestimmbar ist.

Zum Verstellen der Trenneinheit und zum Ermitteln der Positionen der Trennvorrichtung sind eine Vielzahl von Sensoren und Steuerelemente erforderlich, weiterhin muss elektrische Energie in hydraulische umgewandelt werden, um einen Antrieb zu betätigen.

Aufgabe der Erfindung ist es, einen Antrieb für die Trennwerkzeuge anzubieten bei dem die Masse des beweglichen Teils der Trenneinheit deutlich geringer ist.

Die **Lösungder** Aufgabe ist in Anspruch 1 definiert.

Das gesamte System ist somit in der Lage bei einer Überlast auszuweichen, um Beschädigungen zu vermeiden. Das kann erforderlich sein, wenn beispielsweise eine Unrundung im Kunststoffrohr vorliegt. Vorteilhafter Weise ist die elektromechanische Einheit zum Verfahren der Schneidwerkzeuge ein Linearantrieb, der eine motorisch angetriebene Spindel umfasst. Es ist aber auch vorgesehen eine Zahnstange mit Zahnrad, einen Zahnriemen oder ein Magnetfeld einzusetzen.

Bei hydraulischen Antrieben hat die Betriebstemperatur einen Einfluss auf das Verhalten des Antriebes und damit auf die exakte Steuerung der damit betrieben Einheiten. Es ist eine Vielzahl an technischen Komponenten erforderlich, um diese unterschiedlichen Betriebszustände zu erfassen und darauf entsprechend zu reagieren und diese zu steuern. So unterscheidet sich z.B. bei kaltem Öl die Ausgangsposition eines Zylinders zu der bei erwärmtem Öl. All diese Zustände müssen über Sensoren erfasst werden, um eine optimale Steuerung zu erzielen, die Anlage muss erst auf Betriebstemperatur gefahren werden.

Bei der erfindungsgemäßen Vorrichtung kann das Alles entfallen, da alle Zustände bereits über modernen Linearantrieben gespeichert werden können und somit immer abrufbar sind.

Weiterbindungsgemäß weist die rotierende Aufnahmeeinheit zwei Flächen auf. Nur eine der Flächen ist für die Montage der Schneidwerkzeuge vorgesehen und die komplette Energieversorgung erfolgt über die Fläche der rotierenden Aufnahmeeinheit an der keine Schneidwerkzeuge montiert sind.

Um einer Kraft entgegen der Trennkraft ausweichen zu können, sofern diese Kraft größer ist als die benötigte Trennkraft, ist vorgesehen, dass die elektromechanische Einheit, der Träger oder das Schneidwerkzeug mit einem oder mehreren Federelementen in Wirkverbindung steht.

Hierbei kann verschiede Technik eingesetzt werden. Entscheidend ist, ob in der Wirkungskette von der elektromechanischen Einheit über den Träger und dem Schneidwerkzeug ein Ausweichen bei Überlast möglich ist. Ist eines der Elemente naturgemäß selbsthemmend, ist es erforderlich entsprechende Federelemente in der Kette einzubinden. Das kann in einer linearen Richtung eine Anordnung mehrerer Tellerfeder sein. Es ist aber auch denkbar Drehfedern oder andere Element einzusetzen, die eine federnde Wirkung entfalten. Dies können z.B. eine Zahnstange mit Zahnrad und Torsionsfeder oder ein Magnetfeld sein in dem ein beweglicher Kern schwebt.

Somit ist auch das Ausweichen bei zu hohem Vorschub des Schneidwerkzeuges sichergestellt. Das System biete so eine hohe Flexibilität bei der Umsetzung des Trennens oder Fasens des Rohres.

Es ist auch vorgesehen den Trennvorgang zu Stoppen und wieder fortzuführen, also ein Stopp and Go im Vorschub des Schneidwerkzeuges zu ermöglichen, sofern erforderlich, auch ein Zurückfahren bis zum Ausgangspunkt. Es entsteht so eine Art Stotterschnitt, wodurch kleine kurze Späne erzeugt werden, es ist auch ein kurzes Vor und Zurück denkbar um die Späne zu brechen. Kleine Späne bedeuten einen geringer Aufwand bei der Reinigung und zusätzlich weiniger Volumen beim Abfall.

Bei der erfindungsgemäßen Vorrichtung und dem erfindungsgemäßen Verfahren kann dies alles in Bruchteilen von Sekunden umgesetzt werden, da es mittels elektrischer und/oder elektronischer Signale erfolgt. Für das Zurückfahren zum Ausgangspunkt wird eine Zeit benötigt die kleiner als fünf Sekunden beträgt, das reine Stopp and Go liegt bei maximal zwei Sekunden. Dies liegt unter anderem auch daran, dass kein mechanisches Spiel mehr in den Bauteilen vorhanden ist.

Mittels herkömmlicher Hydraulik wäre das nur sehr aufwendig möglich, da Ventile angesteuert werden müssen, der dafür benötigte Zeitaufwand für die Schaltvorgänge ist um ein Vielfaches höher.

Die federnde Wirkung kann auch über ein Magnetfeld erzeugt werden in dem ein Bolzen schwebt. Ein Kernbolzen wird nicht über ein selbsthemmendes Gewinde, sondern über ein Magnetfeld bewegt und kann somit ausweichen. Ebenso ist einen elektromechanischer Antrieb denkbar. Eine Zahnstange mit einem Zahnrad, welche in der Zusammenwirkung nicht selbsthemmend sind, kann ebenfalls dem Gegendruck ausweichen und somit auch ohne ein Federelement in der Wirkungskette auskommen. Auch Zahnriemen etc. und sonstige nicht selbsthemmend Ausführungen sind denkbar. So sind auch Hydraulikzylinder denkbar die wie Stoßdämpfer wirken. Auch Ausführungen die wie Druckausdehnungsgefäß wirken können zum Einsatz gelangen.

Da das gesamte System aus elektromechanischer Einheit, dem Träger und das daran angeordnete Schneidwerkzeug kleiner baut als eine für die gleiche Krafterzeugung erforderliche hydraulische Einheit, hat es auch weniger Gewicht, was wiederum die zu beschleunigenden Massen minimiert und sich somit vorteilhaft auf den gesamten Energiebedarf auswirkt. Selbstverständlich können auch zwei oder mehrere elektromechanische Einheiten eingesetzt werden die dann jeweils einen Träger mit einem angeordneten Schneidwerkzeug bewegen.

Vorteilhafte Weiterbildungen finden sich in den Unteransprüchen.

Die **Lösung** des erfindungsgemäßen Verfahrens zum Betreiben der Vorrichtung nach Anspruch 1 ist im Anspruch 8 wiedergegeben.

Durch dieses Verfahren ist sichergestellt, dass der Kraftaufwand und die Verfahrgeschwindigkeit der elektromechanischen Einheit von der Betriebstemperatur weitgehend unabhängig sind.

Die Reaktionsgeschwindigkeit nach Steuerbefehlen ist bei einer Temperatur von -5°C genauso gut wie bei einer Temperatur von +40°C, denn es wird direkt ein elektrisches Signal verarbeitet und muss nicht erst über Ventile - wie in der Hydraulik - gesteuert werden. Die Anlage muss somit für einen sicheren Ablauf nicht erst auf eine Betriebstemperatur gebracht werden.

Das Verfahren ermöglicht auch eine kurzzeitige Unterbrechung des Trennvorganges, wodurch Späne gebrochen werden. Dieses Stoppen, eventuelles Zurückfahren und wieder An- bzw. Vorfahren geschieht innerhalb Bruchteilen von Sekunden. Derartige Schnittverläufe können als Master in der Steuerung vorgehalten werden und bei gleichen oder analogen Trennvorgängen wieder abgerufen werden.

Weitere vorteilhafte Weiterbildungen sind in den Unteransprüchen wiedergegeben.

Durch das erfindungsgemäße Verfahren und die erfindungsgemäße Vorrichtung können auch angetriebene Werkzeuge am Träger angeordnet werden. Das System ist so nicht auf spanloses Trennen beschränkt. Als Schneidwerkzuge sind somit Fräser genauso wie Sägen einsetzbar.

Durch eine intelligente Werkzeugerkennung, die Markierungen am Werkzeug auslesen oder die Kontur des Werkzeuges erkennen kann, können Fehler oder Beschädigungen über die Steuerung vermieden werden. Es kann auch durch die Erkennung des Werkzeuges bereist in der Steuerung hinterlegte Parameter abgerufen werden. So ist zum Beispiel der Vorschub und die Eindringtiefe bei einem Werkzeug zum Fasen begrenzt und kann durch die Erkennung direkt voreingestellt werden.

Die Werkzeugerkennung kann elektromechanische erfolgen, es wird beispielsweise vorgeschlagen sowohl die geometrische Ausführung der Koppeleinheit zwischen Werkzeug und der Werkzeugaufnahme so auszugestalten, dass eindeutig erkannt werden kann welches Werkzeug aufgelegt wurde. Über die Elektrik, z.B. eine bestimmte Anordnung einer Kontaktematrix, wird von der Maschinensteuerung eindeutig erkannt welches Werkzeug aufgelegt ist. Durch diese Erkennung kann über die Steuerung erkannt werden, ob dieses Werkzeug zum auszuführenden Prozess passt. Sollte dies nicht der Fall sein, kann über die Steuerung ein Alarm ausgegeben oder sogar die Ausführung gestoppt bzw. verweigert werden. Diese Überprüfung kann z.B. in Abhängigkeit des Rohrdurchmessers oder der Rohrdicke erfolgen, hierbei kann sich die Erkennung auf die eingelegten Klemmbacken genauso wie auf die Trennmesser oder nur Schneidwerkzeuge zum Fasen beziehen.

Es werden mehrere Ausführungen zur Markierung des Werkzeuges und zu Erkennen des montierten Werkzeuges vorgeschlagen. So kann als Markierung eine Zahlenkodierung eingesetzt werden die von einer Kamera ausgelesen wird. Die Kamera kann das Werkzeug aber auch an Hand seiner Kontur oder an Teilen der Kontur erkennen. Denkbar ist auch der Einsatz eines RFID Tags mit entsprechendem Lesegerät. RFID steht für radio-frequency identifiction und ist ein berührungsloses Sender-Empfänger-System. Auf Basis der RFID Technik kann dann auch per Nahfeldkommunikation, abgekürzt NFC, eine Datenübertragung erfolgen. NFC ist ein internationaler Übertragungsstandard zum kontaktlosen Austausch von Daten. Die Werkzeugerkennung kann aber auch über einen Barcode oder einen QR-Code mit dazu gehörigem Auslesegerät, dem Barcodescanner oder dem QR-Scanner erfolgen.

Es kann aber nicht nur das eingesetzte Werkzeug erkannt werden. Die Erfindung ermöglicht auch das Erkennen des in Produktion befindlichen Rohrdurchmessers, denn die Position der Klemmbacken, die das Rohr beim Schneiden fixieren, kann ausgelesen werden. Dies hat den Vorteil, dass die Verfahrwege zum Loslassen des fixierten Rohres optimiert werden können. Weder die Klemmbacken noch die Schneidwerkzeuge müssen beispielsweise bei einem kleinen Rohrdurchmesser in Ausgangstellung zurückfahren, es genügt ein Zurückfahren bis das Rohr, einschließlich seiner Normtoleranzen, freigegeben ist, um beschädigungsfrei weiter in Extrusionsrichtung an der Trenneinheit vorbei geführt werden kann.

In den Zeichnungen wird schematisch eine erfindungsgemäße Vorrichtung gezeigt:
- Fig. 1: zeigt eine typische Extrusionslinie
- Fig. 2: die Einheit Trennvorrichtung
- Fig. 3: die Trenneinheit
- Fig. 4: eine Ansicht auf eine Seite der Trenneinheit
- Fig. 5: ein Ausschnittvergrößerung von Figur 4
- Fig. 6: eine Variante mit einem Federelement

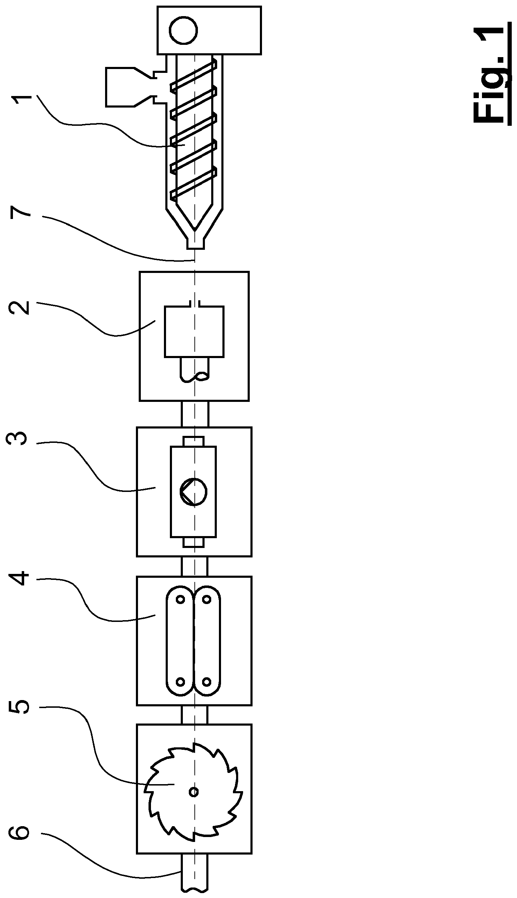

Figur 1 zeigt eine typische Extrusionslinie, wie sie heute für die Profilextrusion, egal, ob für die Produktion von Fensterprofilen oder Rohren, zum Einsatz kommt. Sie zeigt einen Extruder 1, in dem Kunststoff aufgeschmolzen wird, und kontinuierlich zur Formgebung ins Extrusionswerkzeug 2 gefördert wird. Daran schließt sich eine Kalibrier- und Kühlstation 3 an, je nach Profil können weitere Kühlstationen eingesetzt werden. Nach den Kühlstationen schließt sich eine Abzugsvorrichtung 4 an. Um die Endlosprofile 6 auf die gewünschte Länge abzuschneiden ist anschließend eine Trennvorrichtung 5 angeordnet. Die Extrusionsache ist mit Positionsziffer 7 unter Bezug genommen.

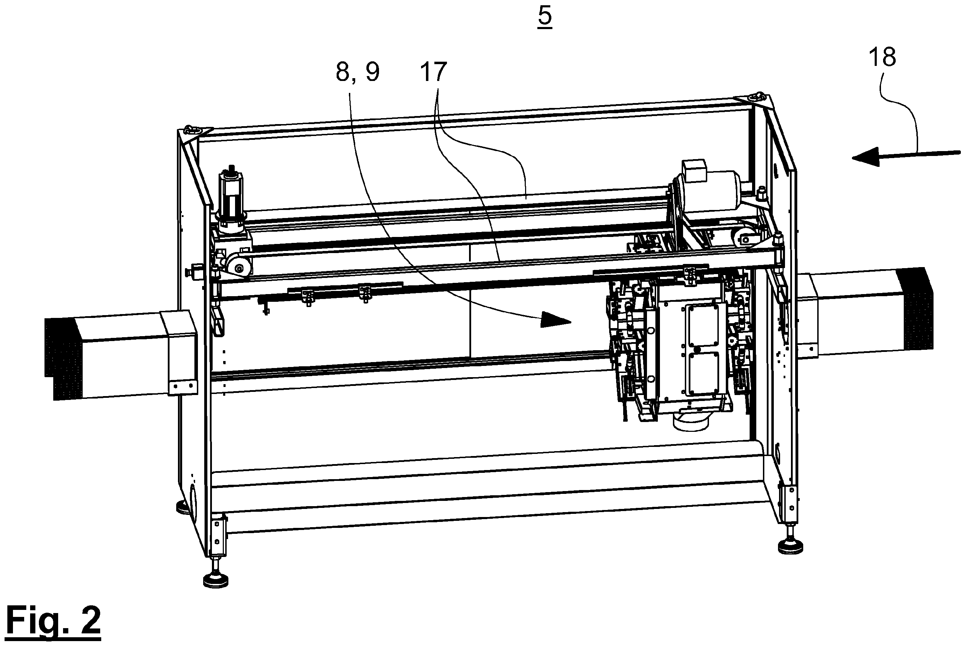

Figur 2 zeigt die Einheit Trennvorrichtung 5 aus Figur 1. Die Trenneinheit 8 wird über die Verfahrschienen 17 beim Trennvorgang in Extrusionsrichtung 18 mit verfahren. Nach dem Trennvorgang wird sie in Ausgansstellung wieder entgegen der Extrusionsrichtung 18 zurückgestellt. An der Trenneinheit 8 sind die Schneidvorrichtungen 9 angeordnet.

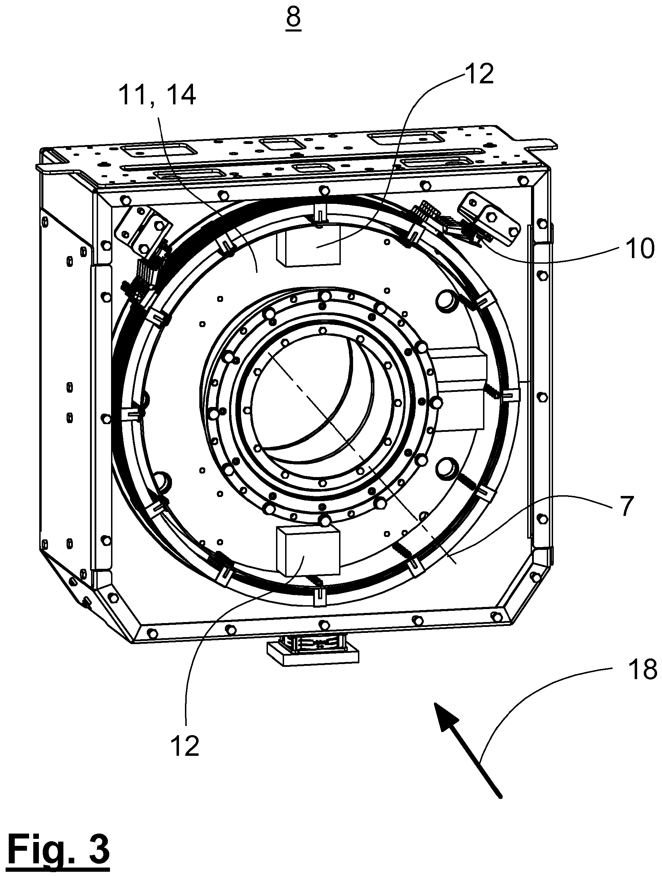

In Figur 3 wird eine Seite der Trenneinheit 8 gezeigt. Die rotierende Aufnahmeeinheit 11 weist eine Fläche 14 auf, die bezogen auf die Extrusionrichtung 18, dem Extruder 1 zugewandt ist. An dieser Fläche 14 sind alle Energieversorgungseinheiten angebracht. Die für das Verfahren der Schneidwerkzeuge 9 erforderliche Energie wird über an mehreren Stellen angeordnete elektrische Versorger 12 sichergestellt. Die elektrischen Versorger 12 werden wiederum über die Schleifringe 10 mit Energie versorgt.

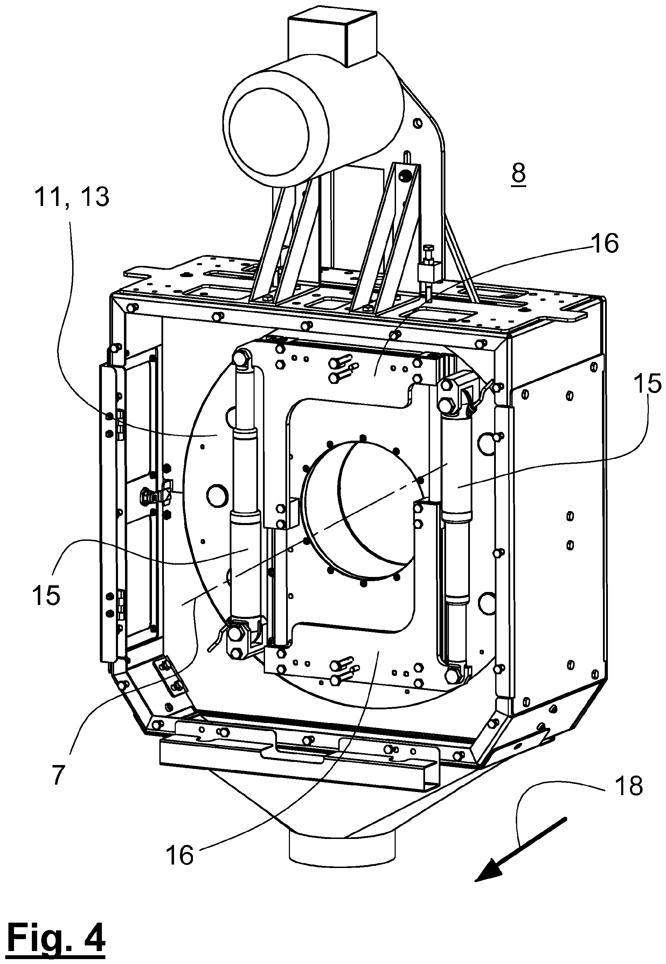

Figur 4 zeigt die gegenüberliegende Seite der rotierenden Aufnahmeeinheit 11. An dieser Fläche 13 sind Linearantrieb 15 angeordnet über die die Träger 16 für die Schneidwerkzeuge 9 senkrecht zur Extrusionsachse 7 verfahren werden. Beispielhaft sind hier zwei Linearantriebe 15 und zwei Träger 16 dargestellt. Beide Antriebe können getrennt voneinander verfahren werden. Dies hat den Vorteil, dass z.B. an einem Träger 16 ein Werkzeug 9 zum Fasen des Profils und am anderen Träger 16 ein Werkzeug 9 zum Trennen aufgelegt sein kann. Das Werkzeug zum Trennen muss weiter in Richtung der Extrusionsachse 7 verfahren werden als das Werkzeug zum Fasen.

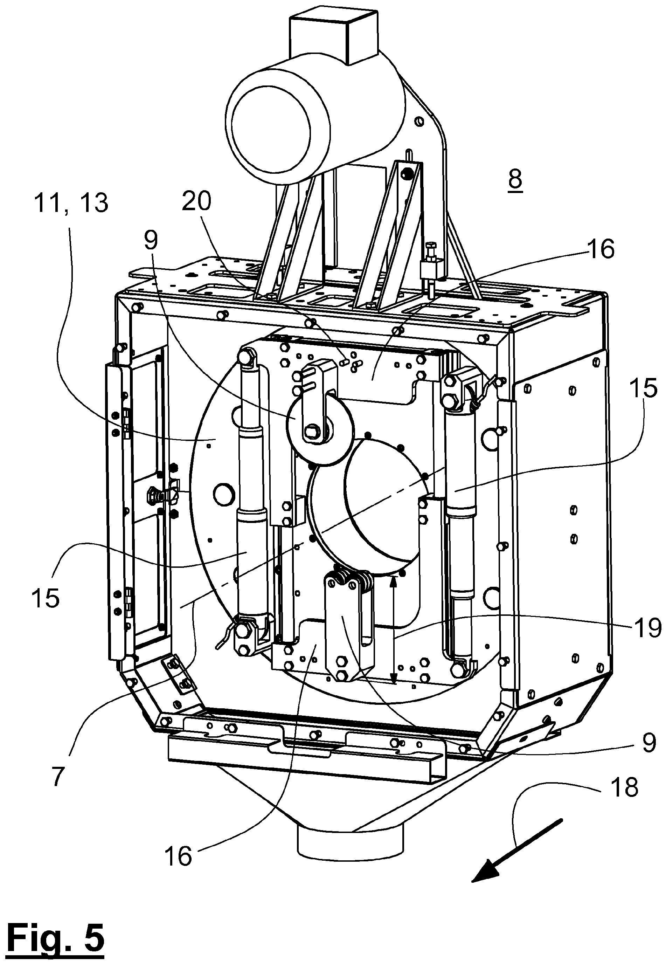

Figur 5 zeigt Figur 4 mit montierten Schneidwerkzeugen 9. Auch hier sind die Linearantriebe 15 für die Träger 16 zusehen. Am oberen Träger 16 ist ein rotierendes Schneidmesser zum Durchtrennen des Rohres vorgesehen und in einer Art Explosionsdarstellung wieder gegeben, da noch nicht endmontiert. Am unteren Träger 16 ist eine Rollenkombination angebracht, die als Wiederlager wirkt, und dem entstehenden Trenndruck des Schneidmessers entgegenwirkt. Sie wirkt wie eine Glättvorrichtung die beim spanlosen Trennen eventuell entstehenden Wulst glättet oder ein Durchbiegen bei dünneren Rohren vermeidet.

Die Träger 16 und die Werkzeuge 9 verfügen über eine Positionierungshilfe 20, wodurch die Montage vereinfacht wird. Zusätzlich sind die Werkzeuge 9 so aufgebaut, dass die Gesamtlänge 19 bei allen einsetzbaren Werkzeugen identisch ist. Das hat den Vorteil, dass ein Verfahren des Trägers 16 beim Wechseln eines Werkzeuges bei gleichem Rohrdurchmesser nicht nötig ist, da der äußere Abstand des Werkzeugs zum Rohraußendurchmesser unverändert bleibt. Zusätzlich können die Werkzeuge mit einer Werkzeugerkennung versehen sein. Die Maschinensteuerung kann dann erkennen, ob für den vorgesehenen Trennprozess ungeeignete Werkzeuge montiert werden und entsprechend mit Warnmeldungen darauf reagieren.

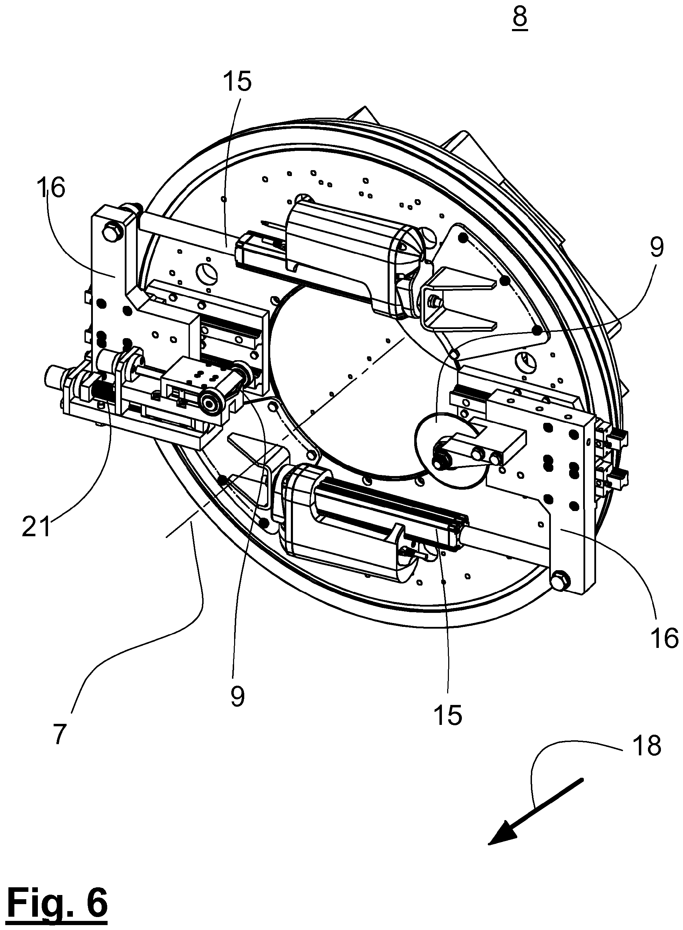

Figur 6 zeigt beispielhaft den Einsatz von einem Paket aus Tellerfedem 21 die es ermöglichen, dass die komplette Einheit bei höherer Belastung ausweichen kann, wodurch eine Werkzeugbeschädigung vermieden wird. Es ist ein Teil der Trenneinheit 8 mit den an der Aufnahmeeinheit angeordneten Linearantrieben 15 und den Trägern 16 zu sehen. Die Ansicht ist im Vergleich zu den Figuren 4 und 5 um 90° gedreht. Am, in der Ansicht gezeigten rechten Träger 16, ist wie in Figur 5 ein rotierendes Trennmesser 9 montiert, das über den Linearantrieb 15 auf die Extrusionsachse 7 zu und von dieser weg bewegt werden kann.

Unabhängig von diesem ist das Werkzeug 9, welches mit einer Spitze zum Fasen ausgestattet ist und am linken Träger 16 montiert ist, ebenfalls über den Linearantrieb 15 auf die Extrusionsachse 7 zu und von dieser weg bewegbar. Zusätzlich ist das Werkzeug 9 zum Fasen über ein Federelement 21, hier eine Anordnung mehrerer Tellerfedern in der Lage, bei einer Überlast auszuweichen. Das heißt, der auftretenden Last, radial zur Extrusionsachse, in Abhängigkeit der Federspannung, von der Extrusionsachse federn weg zu gleiten. Die Kraft, ab wann ein Ausweichen erfolgen soll, kann somit über die Anzahl an Tellerfedern bestimmt werden.

Denkbar sind aber auch andere als Federelemente wirkende Bauteile, selbst eine federnde Drehbewegung, bei der die Einheit aus der radialen Achse geschwenkt wird, ist denkbar.

### Bezugszeichenliste:

- 1: Extruder
- 2: Extrusionswerkzeug
- 3: Kalibrier- und Kühltank
- 4: Abzugsvorrichtung
- 5: Trennvorrichtung
- 6: Profil
- 7: Extrusionsachse
- 8: Trenneinheit
- 9: Schneidwerkzeug
- 10: Schleifring
- 11: rotierende Aufnahmeeinheit
- 12: elektrische Komponente
- 13: Fläche von 11 für Montage von 9
- 14: Fläche von 11 für Energieübertragung
- 15: elektromechanische Einheit, Linearantrieb
- 16: Träger für 9
- 17: Verfahrschiene für 8
- 18: Extrusionsrichtung
- 19: gesamte Länge von 9
- 20: Positionierungshilfe für 9
- 21: Federelement

## Patentansprüche

1. Vorrichtung zum Ablängen eines extrudierten Kunststoffrohres (6) mittels einer Trennvorrichtung (5) mit einer um die Extrusionsachse (7) des extrudierten Rohres (6) angeordneten Trenneinheit (8) an der eine rotierende Aufnahmeeinheit (11) mit Schneidwerkzeugen (9) angeordnet ist,
wobei das Trennen mit einem an der Aufnahmeeinheit (11) angeordneten Schneidwerkzeug (9) erfolgt,
**dadurch gekennzeichnet, dass** zum Bewegen der Schneidwerkzeuge (9) Energie übertragbar ist, wofür Elemente (10) zur Energieübertragung an bewegten Teilen (10) angeordnet sind die mit der Aufnahmeeinheit (11) in Wirkverbindung stehen,
wobei zusätzlich mindestens eine elektrische Komponente (12) an der rotierenden Aufnahmeeinheit (11) angebracht ist über die die Energie und Steuerbefehle an mindestens eine elektromechanische Einheit (15) zum Verfahren von mindestens einem Träger (16) und daran angeordnetem Schneidwerkzeug (9) weitergegeben werden,
wobei der Raum den die elektromechanische Einheit (15), der Träger (16) und das daran angeordnete Schneidwerkzeug (9) umfassen kleiner baut als eine für die gleiche Krafterzeugung erforderliche hydraulische Einheit,
wobei die elektromechanische Einheit (15), der Träger (16) und das Schneidwerkzeug (9) so angeordnet sind dass bei der Verwendung der Vorrichtung in der Wirkungskette von der elektromechanischen Einheit über den Träger (16) und dem Schneidwerkzeug (9) einer Kraft entgegen der Trennkraft ausgewichen werden kann, sofern diese Kraft größer ist als die benötigte Trennkraft.

2. Vorrichtung nach Anspruch 1, **dadurch gekennzeichnet, dass** die elektromechanische Einheit (15) zum Verfahren des Trägers (16) und daran angeordneten Schneidwerkzeuges (9) ein Linearantrieb (15) ist.

3. Vorrichtung nach Anspruch 1 oder 2, **dadurch gekennzeichnet, dass** die elektromechanische Einheit (15) zum Verfahren des Trägers (16) und daran angeordneten Schneidwerkzeuges (9) eine motorisch angetriebene Spindel ist.

4. Vorrichtung nach einem der Ansprüche 1 bis 3, **dadurch gekennzeichnet, dass** die rotierende Aufnahmeeinheit (11) zwei Flächen (13, 14) aufweist und nur eine Fläche (13) für die Montage der Schneidwerkzeuge (9) vorgesehen ist und die komplette Energieversorgung über die Fläche (14) der rotierenden Aufnahmeeinheit (11) erfolgt an der keine Schneidwerkzeuge (9) montiert sind.

5. Vorrichtung nach einem der Ansprüche 1 bis 3, **dadurch gekennzeichnet, dass** die elektromechanische Einheit (15), der Träger (16) oder das Schneidwerkzeug (9) mit einem oder mehreren Federelementen (21) in Wirkverbindung steht.

6. Vorrichtung nach mindestens einem der Ansprüche 1 bis 3, **dadurch gekennzeichnet**, die elektromechanische Einheit (15), der Träger (16) oder das Schneidwerkzeug (9) mit einer Zahnstange mit Zahnrad und Torsionselement in Wirkverbindung steht.

7. Vorrichtung nach mindestens einem der Ansprüche 1 bis 3, **dadurch gekennzeichnet**, die elektromechanische Einheit (15), der Träger (16) oder das Schneidwerkzeug (9) in einem Magnetfeld schwebt.

8. Verfahren zum Betreiben einer Vorrichtung nach Anspruch 1, wobei Energie über Elemente (10) zur Energieübertragung an bewegte Teile an elektrische Komponenten (12) übertragen wird, **dadurch gekennzeichnet, dass**
die elektrischen Komponenten (12) die Energie zum Verfahren der elektromechanischen Einheiten (15) weiterleiten,
die elektrischen Komponenten (12) Steuerbefehle an die elektromechanischen Einheiten (15) weiterleiten,
in den elektrischen Komponenten (12) Energie gespeichert und bei Spitzenlasten wieder abgegeben werden kann und
die elektrischen Komponenten (12) geeignet sind Signale kontaktlos zu empfangen.

9. Verfahren nach Anspruch 8, **dadurch gekennzeichnet, dass** der Kraftaufwand und die Verfahrgeschwindigkeit der elektromechanischen Einheit (15) von der Betriebstemperatur unabhängig sind.

10. Verfahren nach Anspruch 8 oder 9, **dadurch gekennzeichnet, dass** das Schneidwerkzeug (9) auf die Extrusionsachse (7) zu bewegt wird, wobei die radiale Bewegung schnell gestoppt, zurückgefahren und wieder vorgefahren wird, wobei dieses Stopp-Zurück-Start in Bruchteilen einer Sekunde geschieht.

## Claims

1. Device for cutting an extruded plastic pipe (6) to length by means of a cutting device (5) with a cutting unit (8) which is arranged around the extrusion axis (7) of the extruded pipe (6) and on which a rotating holding unit (11) with cutting tools (9) is arranged,
whereby the cutting is carried out with a cutting tool (9) arranged on the holding unit (11),
**characterised in that**
energy can be transmitted to move the cutting tools (9), for which purpose elements (10) for transmitting energy are arranged on moving parts (10) which are operatively connected to the holding unit (11),
wherein in addition at least one electrical component (12) is attached to the rotating holding unit (11) via which the energy and control commands are transmitted to at least one electromechanical unit (15) for moving at least one carrier (16) and cutting tool (9) arranged thereon,
wherein the space enclosed by the electromechanical unit (15), the carrier (16) and the cutting tool (9) arranged thereon is smaller than a hydraulic unit required for the same force generation,
wherein the electromechanical unit (15), the carrier (16) and the cutting tool (9) are arranged in such a way that, when the device is used in the chain of action from the electromechanical unit via the carrier (16) and the cutting tool (9), a force against the separating force can be avoided if this force is greater than the required separating force.

2. Device according to claim 1, **characterised in that** the electromechanical unit (15) for moving the carrier (16) and the cutting tool (9) arranged thereon is a linear drive (15).

3. Device according to claim 1 or 2, **characterised in that** the electromechanical unit (15) for moving the carrier (16) and the cutting tool (9) arranged thereon is a motor-driven spindle.

4. Device according to one of claims 1 to 3, **characterised in that** the rotating holding unit (11) has two surfaces (13, 14) and only one surface (13) is provided for mounting the cutting tools (9) and the complete energy supply is provided via the surface (14) of the rotating holding unit (11) on which no cutting tools (9) are mounted.

5. Device according to one of claims 1 to 3, **characterised in that** the electromechanical unit (15), the carrier (16) or the cutting tool (9) is operatively connected to one or more spring elements (21).

6. Device according to at least one of claims 1 to 3, **characterised in that** the electromechanical unit (15), the carrier (16) or the cutting tool (9) is operatively connected to a rack with gear wheel and torsion element.

7. Device according to at least one of claims 1 to 3, **characterised in that** the electromechanical unit (15), the carrier (16) or the cutting tool (9) floats in a magnetic field.

8. Method of operating a device according to claim 1, wherein energy is transmitted to electrical components (12) via elements (10) for transmitting energy to moving parts,
**characterised in that**
the electrical components (12) transmit the energy for moving the electromechanical units (15), the electrical components (12) transmit control commands to the electromechanical units (15),
energy can be stored in the electrical components (12) and released again at peak loads and the electrical components (12) are suitable for receiving signals without contact.

9. Method according to claim 8, **characterised in that** the force required and the traversing speed of the electromechanical unit (15) are independent of the operating temperature.

10. Method according to claim 8 or 9, **characterised in that** the cutting tool (9) is moved towards the extrusion axis (7), the radial movement being quickly stopped, retracted and advanced again, this stop/restart taking place in fractions of a second.

## Revendications

1. Dispositif pour couper à longueur un tube en matière plastique extrudé (6) au moyen d'un dispositif de coupe (5) comprenant une unité de coupe (8) disposée autour de l'axe d'extrusion (7) du tube extrudé (6), sur laquelle une unité de réception rotative (11) est disposée des outils de coupe (9),
la séparation étant effectuée avec un outil de coupe (9) disposé sur l'unité de réception (11),
**caractérisé en ce que**
des éléments (10) de transmission d'énergie sont disposés à cet effet sur des parties mobiles (10) qui sont en liaison active avec l'unité de réception (11),
au moins un composant électrique (12) étant en outre monté sur l'unité de réception rotative (11) par l'intermédiaire duquel l'énergie et les instructions de commande sont transmises à au moins une unité électromécanique (15) pour le déplacement d'au moins un support (16) et d'un outil de coupe (9) disposé sur celui-ci,
dans lequel l'espace que l'unité électromécanique (15), le support (16) et l'outil de coupe (9) disposé sur celui-ci comprennent est plus petit qu'une unité hydraulique nécessaire pour la même production de force,
dans lequel l'unité électromécanique (15), le support (16) et l'outil de coupe (9) sont disposés de telle sorte que, lors de l'utilisation du dispositif, il est possible d'éviter, dans la chaîne d'action allant de l'unité électromécanique à l'outil de coupe (9) en passant par le support (16), une force s'opposant à la force de séparation, dans la mesure où cette force est supérieure à la force de séparation nécessaire.

2. Dispositif selon la revendication 1, **caractérisé en ce que** l'unité électromécanique (15) pour déplacer le support (16) et l'outil de coupe (9) disposé sur celui-ci est un entraînement linéaire (15).

3. Dispositif selon la revendication 1 ou 2, **caractérisé en ce que** l'unité électromécanique (15) pour déplacer le support (16) et l'outil de coupe (9) disposé sur celui-ci est une broche entraînée par un moteur.

4. Dispositif selon l'une des revendications 1 à 3, **caractérisé en ce que** l'unité de réception rotative (11) présente deux surfaces (13, 14) et qu'une seule surface (13) est prévue pour le montage des outils de coupe (9) et que l'alimentation en énergie complète est assurée par la surface (14) de l'unité de réception rotative (11) sur laquelle aucun outil de coupe (9) n'est monté.

5. Dispositif selon l'une des revendications 1 à 3, **caractérisé en ce que** l'unité électromécanique (15), le support (16) ou l'outil de coupe (9) est en liaison active avec un ou plusieurs éléments élastiques (21).

6. Dispositif selon au moins l'une des revendications 1 à 3, **caractérisé en ce que** l'unité électromécanique (15), le support (16) ou l'outil de coupe (9) est en liaison fonctionnelle avec une crémaillère avec roue dentée et élément de torsion.

7. Dispositif selon au moins l'une des revendications 1 à 3, **caractérisé en ce que** l'unité électromécanique (15), le support (16) ou l'outil de coupe (9) est en suspension dans un champ magnétique.

8. Procédé d'exploitation d'un dispositif selon la revendication 1, dans lequel de l'énergie est transmise à des composants électriques (12) par l'intermédiaire d'éléments (10) de transmission d'énergie à des pièces mobiles,
**caractérisé en ce que**
les composants électriques (12) transmettent l'énergie pour déplacer les unités électromécaniques (15), les composants électriques (12) transmettent des instructions de commande aux unités électromécaniques (15),
de l'énergie peut être stockée dans les composants électriques (12) et restituée en cas de charges de pointe et que les composants électriques (12) sont adaptés pour recevoir des signaux sans contact.

9. Procédé selon la revendication 8, **caractérisé en ce que** l'effort et la vitesse de déplacement de l'unité électromécanique (15) sont indépendants de la température de fonctionnement.

10. Procédé selon la revendication 8 ou 9, **caractérisé en ce que** l'outil de coupe (9) est déplacé vers l'axe d'extrusion (7), le mouvement radial étant rapidement arrêté, reculé et avancé à nouveau, cet arrêt-redémarrage se produisant en fractions de seconde.
